# EUROPÄISCHE PATENTSCHRIFT

(11) **EP 2 757 617 B1**
(45) Veröffentlichungstag und Bekanntmachung des Hinweises auf die Patenterteilung: **31.12.2014**
(21) Anmeldenummer: 14150339.1
(22) Anmeldetag: 07.01.2014
(51) Int. Cl.: H01M 4/133, H01M 4/134, H01M 4/1393, H01M 4/1395, H01M 4/62

(54) **Elektrode für eine Li-Ionenbatterie mit Polyether/Siloxan-Copolymer als Binder**
Electrode for an Li ion battery having a polyether-siloxane copolymer as binder
Électrode pour batterie lithium d'ions incluant un copolymère de polyéther-siloxane comme liant

(30) Priorität: 18.01.2013 DE 102013200750
(43) Veröffentlichungstag der Anmeldung: 23.07.2014
(73) Patentinhaber: Wacker Chemie AG, 81737 München (DE)
(72) Erfinder: Gigler, Peter, 85221 Dachau (DE); Haufe, Stefan, 85579 Neubiberg (DE); Stohrer, Jürgen, 82049 Pullach (DE)
(74) Vertreter: Fritz, Helmut

(56) Entgegenhaltungen:
- EP-A1- 0 525 728
- US-A1- 2007 065 728
- US-A1- 2012 153 219

## Beschreibung

Die Erfindung betrifft eine Elektrode für eine Li-Ionenbatterie, die als Binder ein vernetztes Polyether/Siloxan-Copolymer aus Polyethereinheiten und Siloxaneinheiten enthält.

Die Entwicklung leistungsfähigerer Elektrodenmaterialien für Li-Ionenbatterien, insbesondere von Anodenmaterialien, erfordert gleichzeitig die Entwicklung kompatibler Bindersysteme. Das für Graphitelektroden eingesetzte PVDF ist für den Einsatz in Si-haltigen Elektroden aufgrund chemischer Instabilität nicht geeignet. Dies äußert sich in schlechtem elektrochemischen Zyklenverhalten.

Alternativ werden wässrig verarbeitbare Bindersysteme wie beispielsweise Na-CMC, Polyvinylalkohole oder Acrylate beschrieben. Diese eignen sich aufgrund ihrer Reaktivität gegenüber dem lithiierten (beladenen) Aktivmaterial, beispielsweise Li-Silicid, oder des zur Verarbeitung verwendeten, meist protischen Lösungsmittels nicht für die Verarbeitung Li-beladener Aktivmaterialien.

US 2012/0153219 beschreibt die Verwendung von Siloxan-haltigen Bindern. Beschrieben werden unter anderem Si-H-Gruppen enthaltende Siloxane mit einseitig gebundenen, flexiblen Polyether-Seitenketten, welche in einem weiteren Verfahrensschritt mit bifunktionellen Polyethereinheiten über Hydrosilylierung vernetzt werden. Die einseitig gebundenen Polyether-Seitenketten sollen durch ihre Beweglichkeit den Li-Ionentransport ermöglichen.

Die in der US 2012/0153219 beschriebenen nicht vernetzten Binder zeigen im Vergleich zum herkömmlich eingesetzten PVDF ein deutlich verbessertes Zyklenverhalten an Si-Anoden.

Ein wesentlicher Nachteil der in der US 2012/0153219 beschriebenen Binder ist die Herstellung der Si-H-Gruppen enthaltenden, seitenkettenmodifizierten Siloxane, die der eigentlichen Vernetzung vorangeht und einen zusätzlichen und Verfahrensschritt darstellt.

Es bestand die Aufgabe, ein elektrochemisch und chemisch stabiles Bindersystem bereitzustellen, welches sich durch eine einfache Darstellung auszeichnet.

Gegenstand der Erfindung ist eine Elektrode für eine Li-Ionenbatterie, die als Binder ein vernetztes Polyether/Siloxan-Copolymer (V) enthält, das herstellbar ist durch Vernetzung von Siloxanmakromeren (S) der durchschnittlichen allgemeinen Formel (1)

HₐR¹_{b}SiO_{(4-a-b)/2} (1),

in der
- **R¹**: einen einwertigen, über SiC-gebundenen C₁-C₁₈-Kohlenwasserstoffrest, der frei ist von aliphatischen Kohlenstoff-Kohlenstoff Mehrfachbindungen und
**a** und **b** nichtnegative ganze Zahlen sind,
mit der Maßgabe, dass 0,5<**(a+b)**<3,0 und 0<a<2, und dass mindestens zwei siliciumgebundene Wasserstoffatome pro Molekül vorhanden sind,
mit mindestens zwei Alkenylgruppen pro Molekül enthaltenden Polyethermakromeren (P) und gegebenenfalls weiteren Alkenylgruppen enthaltenden Verbindungen (W), wobei bei den Verbindungen (W) einfach Allyl-funktionalisierte Polyethylenglykole ausgenommen sind.

Das vernetzte Polyether/Siloxan-Copolymer (V) ist hervorragend als Elektrodenbinder in Li-Ionenbatterien geeignet und kann in nur einem Verfahrensschritt durch Vernetzung von Siloxanmakromeren (S) mit Polyethermakromeren (P) und gegebenenfalls weiteren Verbindungen (W) copolymerisiert werden.

Überraschend wurde gefunden, dass flexible Polyether-Seitenketten wie in der US 2012/0153219, die einen zusätzlichen Präparationsschritt erfordern, nicht erforderlich sind. Die natürliche Quellbarkeit im Elektrolyten ist für die Ionenleitung ausreichend.
Das vernetzte Polyether/Siloxan-Copolymer (V) zeigt eine hohe elektrochemische Stabilität und ist stabil gegenüber Reduktionsmitteln, insbesondere gegenüber Lithiumsilicid, und somit auch für den Einsatz in Si-haltigen Anoden geeignet. Weiterhin sind auch die Siloxanmakromere (S) und Polyethermakromere (P) ebenfalls stabil, was die Verwendung von Li-beladenen Aktivmaterialien, wie beispielsweise Lithiumsilicid, ermöglicht.

Die Elektrode wird vorzugsweise hergestellt durch Vernetzung der Siloxanmakromere (S) und Polyethermakromere (P) und gegebenenfalls Verbindungen (W) in Anwesenheit von Aktivmaterial sowie weiteren Komponenten der Elektrode.

Vorzugsweise wird das vernetzte Polyether/Siloxan-Copolymer (V) hergestellt durch Vernetzung der Silikonmakromeren (S), die ausgewählt werden aus linearen, verzweigten, cyclischen oder dreidimensional vernetzten Polysiloxanen.

Beispiele für Reste R¹ in der allgemeinen Formel (1) sind Alkylreste, wie der Methyl-, Ethyl-, n-Propyl-, iso-Propyl-, n-Butyl-, iso-Butyl-, tert.-Butyl-, n-Pentyl-, iso-Pentyl-, neoPentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha- und der β-Phenylethylrest.

**R¹** weist vorzugsweise 1 bis 6 Kohlenstoffatome auf. Insbesondere bevorzugt sind Methyl und Phenyl.

Bevorzugt ist die Verwendung von drei oder mehr SiH-Bindungen pro Molekül enthaltenden Siloxanmakromeren (S). Bei Verwendung von nur zwei SiH-Bindungen pro Molekül aufweisenden Siloxanmakromeren (S) empfiehlt sich die Verwendung von Polyethermakromeren (P) die über mindestens drei Alkenylgruppen pro Molekül verfügen.

Der Wasserstoffgehalt der Siloxanmakromeren (S), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Die Siloxanmakromeren (S) enthalten vorzugsweise mindestens drei und höchstens 600 Siliciumatome pro Molekül. Bevorzugt ist die Verwendung von SiH-Organosiliciumverbindungen (S), die 4 bis 200 Siliciumatome pro Molekül enthalten.

Besonders bevorzugte Siloxanmakromeren (S) sind lineare Polyorganosiloxane der allgemeinen Formel (2)

(HR²₂SiO_{1/2})ₛ(R²₃SiO_{1/2})ₜ(HR²SiO_{2/2})ᵤ(R²₂SiO²/₂)ᵥ (2),

wobei
**R²** die Bedeutungen von **R¹** hat und
die nichtnegativen ganzen Zahlen **s, t, u** und **v** folgende Relationen erfüllen: (**s+t**)=2, (**s+u**)>2, 5<(**u+v**)<1000 und 0,1<**u**/(**u** +**v**)≤1.
Vorzugsweise ist s = 0.
Vorzugsweise ist 10<(**u+v**)<100

Die SiH-funktionellen Siloxanmakromeren (S) sind vorzugsweise in einer solchen Menge in der Mischung aus Siloxanmakromeren (S) mit Polyethermakromeren (P) und gegebenenfalls Verbindungen (W) enthalten, dass das Molverhältnis von SiH-Gruppen zu Alkenylgruppen bei 0,1 bis 2, insbesondere bei 0,3 bis 1,0 liegt.

Auf 100 Gewichtsteile Aktivmaterial werden vorzugsweise 0,1 bis 50, besonders bevorzugt 0,5 bis 15 Gewichtsteile Siloxanmakromere (S) eingesetzt.

Als Polyethermakromere (P) sind ungesättigte Polyalkylenoxide mit mindestens 3 Alkylenoxid-Einheiten bevorzugt, die mindestens zwei endständige ungesättigte Gruppen enthalten.

Die Polyethermakromere (P) können linear oder verzweigt sein.

Die ungesättigte Gruppe wird vorzugsweise ausgewählt aus den Gruppen Vinyl, Allyl, Methallyl, Dimethylvinylsilyl und Styryl. Die ungesättigte Gruppe steht bevorzugt am Kettenende. Die Alkylenoxid-Einheiten im Polymer sind bevorzugt solche mit 1 bis 8 C-Atomen und können gleich oder verschieden sein und können statistisch oder blockartig verteilt sein. Als Alkylenoxid-Einheiten kommen vorzugsweise Ethylenoxid, Propylenoxid, Butylenoxid in Betracht, besonders bevorzugt werden Ethylenoxid und Propylenoxid sowie deren Gemische. Bevorzugt sind Kettenlängen von 3 bis 1000, insbesondere 3 bis 100 Wiederholungseinheiten.

Am meisten bevorzugt als ungesättigte Polyether sind Polyethylenglykol-Divinylether, Polyethylenglykol-Diallylether, Polyethylenglykol-Dimethallylether, Polypropylenglykol-bis(dimethylvinylsilyl)ether, wobei die ungesättigten Gruppen jeweils endständig sind.

Auf 100 Gewichtsteile Aktivmaterial werden vorzugsweise 0,1 bis 50, besonders bevorzugt 0,5 bis 15 Gewichtsteile Polyethermakromere (P) eingesetzt.

Verbindungen (W) können beispielsweise sein hydrolysierbare Vinylsilane, alkenylterminierte Alkohole, Carbonsäuren, Carbonsäureester oder Epoxide.
Bevorzugte Verbindungen (W) sind Vinyltrimethoxysilan, Allylalkohol, Methacrylsäure und Acrylsäuremethylester.

Auf 100 Gewichtsteile Aktivmaterial werden vorzugsweise 0 bis 5, besonders bevorzugt 0 bis 3 Gewichtsteile Verbindungen (W) eingesetzt. In einer bevorzugten Ausführungsform werden keine Alkenylgruppen enthaltenden Verbindungen (W) eingesetzt.

Die Vernetzung von Siloxanmakromeren (S) mit Polyethermakromeren (P) und gegebenenfalls Verbindungen (W) kann katalysiert durch Hydrosilylierungskatalysatoren oder radikalisch erfolgen.

Bevorzugt erfolgt die Vernetzung katalysiert durch Hydrosilylierungskatalysatoren.

Als Radikalbildner für die radikalische Vernetzung können Peroxide, insbesondere organische Peroxide eingesetzt werden. Beispiele für organische Peroxide sind Peroxyketal, z.B. 1,1-Bis(tert.-butylperoxy)-3,3,5-trimethylcyclohexan, 2,2-Bis(tert.-butylperoxy)butan; Acylperoxide, wie z. B. Acetylperoxid, Isobutylperoxid, Benzoylperoxid, Di(4-methylbenzoyl)peroxid, Bis-(2,4-dichlorbenzoyl)peroxid; Dialkylperoxide, wie z. B. Di-tert-butylperoxid, Tert-butylcumylperoxid, Dicumylperoxid, 2,5-Dimethyl-2,5-di(tert.-butylperoxy)hexan; und Perester, wie z.B. Tert.-butylperoxyisopropyl-carbonat.

Werden zur Vernetzung Peroxide verwendet, so wird der Gehalt an Peroxiden vorzugsweise so gewählt, dass die Mischung, welche die zu vernetzenden Bestandteile Siloxanmakromere (S), Polyethermakromere (P), gegebenenfalls Verbindungen (W) sowie ein Aktivmaterial enthält, einen Gehalt an Peroxiden von 0,05-8 Gew.-%, bevorzugt 0,1-5 Gew.-% und besonders bevorzugt 0,5-2 Gew.-% besitzt, jeweils bezogen auf das Gesamtgewicht von Siloxanmakromeren (S), Polyethermakromeren (P) und gegebenenfalls Verbindungen (W).

Als Hydrosilylierungskatalysatoren für die Vernetzung der Siloxanmakromeren (S) mit den Polyethermakromeren (P) und gegebenenfalls Verbindungen (W) können alle bekannten Katalysatoren eingesetzt werden, welche die bei der Vernetzung von additionsvernetzenden Siliconzusammensetzungen ablaufenden Hydrosilylierungsreaktionen katalysieren.

Als Hydrosilylierungskatalysatoren werden insbesondere Metalle und deren Verbindungen aus der Gruppe Platin, Rhodium, Palladium, Ruthenium und Iridium eingesetzt.
Vorzugsweise werden Platin und Platinverbindungen verwendet. Bevorzugte Hydrosilylierungskatalysatoren sind Pt(0) Komplexe, insbesondere ein Divinyltetramethyldisiloxan-Platin(0) Komplex oder H₂PtCl₆.
Besonders bevorzugt werden auch solche Platinverbindungen, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan.

Der Hydrosilylierungskatalysator kann in jeder beliebigen Form eingesetzt werden, beispielsweise auch in Form von Hydrosilylierungskatalysator enthaltenden Mikrokapseln, oder Polyorganosiloxanpartikeln.

Der Gehalt an Hydrosilylierungskatalysatoren wird vorzugsweise so gewählt, dass die Mischung welche die zu vernetzenden Bestandteile Siloxanmakromere (S), Polyethermakromere (P) und gegebenenfalls Verbindungen (W) sowie Aktivmaterial enthält, einen Pt-Gehalt von 0,1 bis 200 Gew.-ppm, insbesondere von 0,5 bis 120 Gew.-ppm besitzt, jeweils bezogen auf das Gesamtgewicht von Siloxanmakromeren (S), Polyethermakromeren (P) und gegebenenfalls Verbindungen (W).

Bei Anwesenheit von Hydrosilylierungskatalysatoren ist die Verwendung von Inhibitoren bevorzugt. Beispiele gebräuchlicher Inhibitoren sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane, wie beispielsweise 1,3,5,7-Tetravinyltetramethyltetracyclosiloxan, niedermolekulare Siliconöle enthaltend (CH₃)(CHR=CH)SiO_{2/2}-Gruppen und gegebenenfalls R₂(CHR=CH)SiO_{1/2}-Endgruppen, wie beispielsweise Divinyltetramethyldisiloxan, Tetravinyldimethyldisiloxan, Trialkylcyanurate, Alkylmaleate, wie beispielsweise Diallylmaleate, Dimethylmaleat und Diethylmaleat, Alkylfumarate, wie beispielsweise Diallylfumarat und Diethylfumarat, organische Hydroperoxide, wie beispielsweise Cumolhydroperoxid, tert.-Butylhydroperoxid und Pinanhydroperoxid, organische Peroxide, organische Sulfoxide, organische Amine, Diamine und Amide, Phosphane und Phosphite, Nitrile, Triazole, Diaziridine und Oxime. Die Wirkung dieser Inhibitoren hängt von ihrer chemischen Struktur ab, so dass der geeignete Inhibitor und der Gehalt in der zu vernetzenden Mischung individuell bestimmt werden muss.
Der Gehalt an Inhibitoren in der zu vernetzenden Mischung beträgt vorzugsweise 0 bis 50 000 Gew.-ppm, besonders bevorzugt 20 bis 2000 Gew.-ppm, insbesondere 100 bis 1000 Gew.-ppm, jeweils bezogen auf das Gesamtgewicht von Siloxanmakromeren (S), Polyethermakromeren (P) und gegebenenfalls Verbindungen (W).

Die Vernetzung kann in einem oder mehreren Lösungsmitteln durchgeführt werden, insbesondere in aprotischen Lösungsmitteln. Falls aprotische Lösungsmittel verwendet werden, sind Lösungsmittel oder Lösungsmittelgemische mit einem Siedepunkt bzw. Siedebereich von bis zu 210°C bei 0,1 MPa bevorzugt. Beispiele für solche Lösungsmittel sind Ether, wie Dioxan, Tetrahydrofuran, Diethylether, Di-isopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ester, wie Ethylacetat, Butylacetat, Propylpropionat, Ethylbutyrat, Ethyl-isobutyrat; Nitrobenzol und N-Methyl-2-Pyrrolidon, oder Gemische dieser Lösungsmittel.

Die Temperatur bei der Vernetzung beträgt vorzugsweise 20°C bis 150°C, insbesondere 40°C bis 90°C.

Die Zeitdauer der Vernetzung beträgt zwischen 0 und 5 Stunden, vorzugsweise zwischen 0,5 und 3 Stunden.

Der Druck bei der Vernetzung beträgt vorzugsweise 0,010 bis 1 MPa (abs.), insbesondere 0,05 bis 0,1 MPa (abs.).

Das Aktivmaterial für die Elektrode besteht vorzugsweise aus Elementen, die ausgewählt werden aus Kohlenstoff, Silicium, Lithium, Zinn, Titan und Sauerstoff. Bevorzugte Aktivmaterialien sind Silicium, Siliciumoxid, Graphit, Silicium-Kohlenstoff-Komposite, Zinn, Lithium, Lithiumtitanoxid und Lithiumsilicid. Insbesondere bevorzugt sind Graphit und Silicium sowie Silicium-Kohlenstoff-Komposite.

Wenn Siliciumpulver als Aktivmaterial eingesetzt wird, beträgt die Primärpartikelgröße 1-500nm, bevorzugt 50-200nm.

Die Elektrode kann zusätzlich Leitruß enthalten.
Auf 100 Gewichtsteile Aktivmaterial enthält die Elektrode vorzugsweise 1 bis 20, besonders bevorzugt 2 bis 15 Gewichtsteile Leitruß.

Die Elektrode kann neben Siloxanmakromeren (S),
Polyethermakromeren (P), Aktivmaterial, Verbindungen (W), einem organischem Lösungsmittel und Leitruß weitere Komponenten enthalten.

Weitere Komponenten können beispielsweise zusätzliche als Binder geeignete Komponenten sein, wie Styrol-Butadien-Kautschuk und Polyvinylidenfluorid oder die Leitfähigkeit erhöhende Komponenten wie Kohlenstoffnanoröhren (CNT) und Carbonfasern.

In einer bevorzugten Ausführungsform wird die üblicherweise als Elektrodentinte oder -paste bezeichnete Mischung, welche die zu vernetzenden Bestandteile Siloxanmakromere (S), Polyethermakromere (P), gegebenenfalls Verbindungen (W), sowie Aktivmaterial und gegebenenfalls Leitruß sowie weitere Komponenten enthalten kann, in einer Trockenschichtdicke von 2 µm bis 500 µm, bevorzugt von 10 µm bis 300 µm auf eine Kupferfolie oder einen anderen Stromsammler aufgerakelt. Andere Beschichtungsverfahren, wie Rotationsbeschichtung (Spin-Coating), Tauchbeschichtung, Streichen, oder Sprühen, können ebenso verwendet werden. Vor dem Beschichten der Kupferfolie mit der Mischung kann eine Behandlung der Kupferfolie mit einem handelsüblichen Primer, z.B. auf der Basis von Polymerharzen erfolgen. Er erhöht die Haftung auf dem Kupfer, besitzt aber selbst praktisch keine elektrochemische Aktivität.

Die vorstehend beschriebene Mischung, welche das Elektrodenmaterial darstellt, wird vorzugsweise bis zur Gewichtskonstanz getrocknet. Die Trocknungstemperatur richtet sich nach den eingesetzten Komponenten und dem verwendeten Lösungsmittel. Sie liegt vorzugsweise zwischen 20° C und 300° C, besonders bevorzugt zwischen 50° C und 150° C.

Die Vernetzung kann vor, während oder nach der Trocknung stattfinden.

Eine Elektrode kann eine Kathode oder eine Anode sein. Bevorzugt ist eine Anode. Besonders bevorzugt ist eine Siliciumanode.

Alle vorstehenden Symbole der vorstehenden Formeln weisen ihre Bedeutungen jeweils unabhängig voneinander auf. In allen Formeln ist das Siliciumatom vierwertig. Die Summe aller Bestandteile der Siliconmischung ergeben 100 Gew.-%.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### 1) Synthese des reinen Binders und Löslichkeitstest

In einem 100 mL Gefäß wurden 3.83 g Bis(Dimethylvinylsilyl)-Polypropylenglykol und 2.64 g H-Siloxan (der allgemeinen Formel (2) R² = Methyl, t = 2, u durchschnittlich 24, v durchschnittlich 48) zusammen mit stabilisiertem Divinyltetramethyldisiloxan-Platin(0) Komplex (100ppm Pt bezogen auf die Gesamtmasse an Siloxan und Polyether) eingewogen und gut durchmischt. Anschließend wurde die Mischung in ein Teflonschälchen gegossen und 4 Stunden bei 70°C im Trockenschrank vernetzt.
Der transparente Film wurde anschließend 24 h in einer Mischung aus Dimethylcarbonat/ Ethylencarbonat (1:1 w/w) eingelegt. Nach Abtrennung des gequollenen Films wurde das Lösungsmittel entfernt, wobei kein Rückstand zurückblieb, der auf eine Löslichkeit des Binders im Elektrolytlösemittel schließen ließe.

### 2) Synthese einer Modellverbindung

In einer inertisierten Rührapparatur mit Rührfisch und Rückflusskühler wurden 3.73 g Heptamethyltrisiloxan und Divinyltetramethyldisiloxan-Platin(0) (100ppm Pt bezogen auf die Gesamtmasse an Siloxan und Polyether) vorgelegt. Die Mischung wurde auf 70°C (Öl-Bad) aufgeheizt, 4.85 g Bis(Dimethylvinylsilyl)-Polypropylenglykol zugetropft und eine Stunde bei 70°C weitergerührt.

### 3) Stabilitätstest der Modellverbindung gegenüber Lithium-Silicid

In einer Glovebox (< 1 ppm H₂O, O₂) wurden 10 mg Li₁₅Si₄ in 5 mL Toluol suspendiert und tropfenweise 1 g der Modellverbindung aus Beispiel 2 zugegeben. Dabei wurde keine Gasentwicklung und Verfärbung der Lösung beobachtet. Eine NMR-Analytik ergab keinerlei Zersetzung der eingesetzten Modellverbindung.

### 4) Stabilitätstest von Bis(Dimethylvinylsilyl)-Polypropylenglykol gegenüber Lithium-Silicid

In einer Glovebox (< 1 ppm H₂O, O₂) wurden 10 mg Li₁₅Si₄ in 5 mL Toluol suspendiert und tropfenweise 1 g
Bis(Dimethylvinylsilyl)-Polypropylenglykol zugegeben. Dabei wurde keine Gasentwicklung und Verfärbung der Lösung beobachtet. Eine NMR-Analytik ergab keinerlei Zersetzung des Bis(Dimethylvinylsilyl)-Polypropylenglykols.

### 5) Stabilitätstest von H-Siloxan gegenüber Lithium-Silicid

In einer Glovebox (Argon-Atmosphäre) wurden 10 mg Li₁₅Si₄ in 5 mL Toluol suspendiert und tropfenweise 1 g H-Siloxan (von Beispiel 1) zugegeben. Dabei wurde keine Gasentwicklung und Verfärbung der Lösung beobachtet. Eine NMR-Analytik ergab keinerlei Zersetzung des H-Siloxans.

### 6) Darstellung einer Graphit-Anode

86,8% Graphit (KS6L C), 7,4% Leitruß (Super P), 5,8% Binder (bestehend zu je gleichen Teilen aus Bis(Dimethylvinylsilyl)-Polypropylenglykol und H-Siloxan von Beispiel 1 sowie stabilisiertem Divinyltetramethyldisiloxan-Platin(0)-Komplex (100ppm Pt bezogen auf die Gesamtmasse an Siloxan und Polyether) wurden in 6,49 g Toluol mittels Ultra-Turrax dispergiert.
Nach Entgasen wurde die Dispersion mittels eines Filmziehrahmens mit 0,10 mm Spalthöhe (Erichsen, Modell 360) auf eine Kupferfolie (Schlenk Metallfolien, SE-Cu58) mit einer Dicke von 0,030 mm aufgebracht. Die so hergestellte Elektrodenbeschichtung wurde anschließend 3h bei 70° C vernetzt bzw. getrocknet. Das mittlere Flächengewicht der Elektrodenbeschichtung betrug 0,47 mg/cm².

### 7) Elektrochemische Messungen

Die elektrochemischen Untersuchungen wurden an einer Halbzelle in Drei-Elektroden-Anordnung (stromlose Potentialmessung) durchgeführt. Die Elektrodenbeschichtung aus Beispiel 6 wurde als Arbeitselektrode eingesetzt, Lithium-Folie (Rockwood Lithium, Dicke 0,5mm) als Referenz- und Gegenelektrode verwendet. Ein mit 100 µl Elektrolyt getränkter, 6-lagiger Vliesstoffstapel (Freudenberg Vliesstoffe, FS2226E) diente als Separator. Der verwendete Elektrolyt bestand aus einer 1-molaren Lösung von Lithiumhexafluorophosphat in einem 1:1 (w/w) Gemisch von Ethylencarbonat und Dimethylcarbonat. Der Bau der Zelle erfolgte in einer Glovebox (< 1 ppm H₂O, O₂), der Wassergehalt in der Trockenmasse aller verwendeten Komponenten lag unterhalb von 20 ppm.
Die elektrochemische Testung wurde bei 20° C durchgeführt. Als Potentialgrenzen wurden 40 mV und 1,0 V vs. Li/Li⁺ verwendet. Das Laden bzw. Lithiieren der Elektrode erfolgte im cc/cv-Verfahren (constant current / constant voltage) mit konstantem Strom und nach Erreichen der Spannungsgrenze mit konstanter Spannung bis Unterschreiten eines Stroms von 15 mA/g. Das Entladen bzw. Delithiieren der Elektrode erfolgte im cc-Verfahren (constant current) mit konstantem Strom bis Erreichen der Spannungsgrenze. Der gewählte spezifische Strom bezog sich auf das Gewicht der Elektrodenbeschichtung.
Die Elektrodenbeschichtung aus Beispiel 6 hat eine reversible Anfangskapazität von etwa 280 mAh/g und besitzt nach 100 Lade-/Entladezyklen noch ungefähr 90 % ihrer ursprünglichen Kapazität, was einer durchschnittlichen Coulomb-Effizienz von 99,9% entspricht.

### 9) Darstellung einer Silicium-Anode

79.4% Silicium, 7.9% Leitruß (Super P), 12.6% Binder (bestehend zu je gleichen Teilen aus Bis(Dimethylvinylsilyl)-Polypropylenglykol und H-Siloxan (der allgemeinen Formel (2) R² = Methyl, t = 2, u durchschnittlich 12, v durchschnittlich 80) sowie stabilisiertem Divinyltetramethyldisiloxan-Platin(0)-Komplex (100ppm Pt bezogen auf die Gesamtmasse an Siloxan und Polyether) wurden in 5 g Toluol mittels Dissolver dispergiert. Nach Entgasen wurde die Dispersion mittels eines Filmziehrahmens mit 0,10 mm Spalthöhe (Erichsen, Modell 360) auf eine Kupferfolie (Schlenk Metallfolien, SE-Cu58) mit einer Dicke von 0,030 mm aufgebracht. Die so hergestellte Elektrodenbeschichtung wurde anschließend 3h bei 70° C vernetzt bzw. getrocknet. Das mittlere Flächengewicht der Elektrodenbeschichtung betrug 1.68 mg/cm².

## Patentansprüche

1. Elektrode für eine Li-Ionenbatterie, die als Binder ein vernetztes Polyether/Siloxan-Copolymer (V) enthält, das herstellbar ist durch Vernetzung von Siloxanmakromeren (S) der durchschnittlichen allgemeinen Formel (1)
HₐR¹_{b}SiO_{(4-a-b)/2} (1),
in der
**R¹** einen einwertigen, über SiC-gebundenen C₁-C₁₈-Kohlenwasserstoffrest, der frei ist von aliphatischen Kohlenstoff-Kohlenstoff Mehrfachbindungen und
**a** und **b** nichtnegative ganze Zahlen sind,
mit der Maßgabe, dass 0,5< (**a+b**) <3,0 und 0<a<2, und dass mindestens zwei siliciumgebundene Wasserstoffatome pro Molekül vorhanden sind,
mit mindestens zwei Alkenylgruppen pro Molekül enthaltenden Polyethermakromeren (P) und gegebenenfalls weiteren Alkenylgruppen enthaltenden Verbindungen (W), wobei bei den Verbindungen (W) einfach Allyl-funktionalisierte Polyethylenglykole ausgenommen sind.

2. Elektrode nach Anspruch 1, herstellbar durch Vernetzung der Siloxanmakromeren (S) und Polyethermakromeren (P) und gegebenenfalls Verbindungen (W) in Anwesenheit von Aktivmaterial, wobei das Polyether/Siloxan-Copolymer (V) entsteht.

3. Elektrode nach einem der vorangehenden Ansprüche, bei der als Silikonmakromere lineare Polyorganosiloxane der allgemeinen Formel (2)
(HR²₂SiO_{1/2})ₛ(R²₃SiO_{1/2})ₜ(HR²SiO_{2/2})ᵤ(R²₂SiO_{2/2})ᵥ (2),
eingesetzt werden, wobei
**R²** einen einwertigen, über SiC-gebundenen C₁-C₁₈-Kohlenwasserstoffrest, der frei ist von aliphatischen Kohlenstoff-Kohlenstoff Mehrfachbindungen bedeutet und die nichtnegativen ganzen Zahlen **s, t, u** und **v** folgende Relationen erfüllen: (**s+t**)=2, (**s+u**) >2, 5< (**u+v**) <1000 und 0,1<u/(**u +v**)≤1.

4. Elektrode nach einem der vorangehenden Ansprüche, bei der als Polyethermakromere (P) ungesättigte Polyalkylenoxide mit mindestens 3 Alkylenoxid-Einheiten eingesetzt werden, die mindestens zwei endständige ungesättigte Gruppen enthalten.

5. Elektrode nach einem der vorangehenden Ansprüche, bei der die Vernetzung der Siloxanmakromeren (S) mit den Polyethermakromeren (P) und gegebenenfalls Verbindungen (W) durch Hydrosilylierungskatalysatoren katalysiert wird oder radikalisch erfolgt.

6. Elektrode nach Anspruch 5, bei der als Hydrosilylierungskatalysatoren Pt(0) Komplexe eingesetzt werden.

7. Elektrode nach einem der vorangehenden Ansprüche, welche eine Anode ist.

8. Elektrode nach Anspruch 7, bei der das Aktivmaterial für die Anode aus Elementen besteht, die ausgewählt werden aus Kohlenstoff und Silicium.

9. Verfahren zur Herstellung eines vernetzten Polyether/Siloxan-Copolymers (V) als Binder für die Elektrode in einer Li-Ionenbatterie
bei dem Siloxanmakromere (S) der durchschnittlichen allgemeinen Formel (1)
HₐR¹_{b}SiO_{(4-a-b)/2} (1),
in der
**R¹** einen einwertigen, über SiC-gebundenen C₁-C₁₈-Kohlenwasserstoffrest, der frei ist von aliphatischen Kohlenstoff-Kohlenstoff Mehrfachbindungen und
**a** und **b** nichtnegative ganze Zahlen sind,
mit der Maßgabe, dass 0,5<(**a+b**)<3,0 und 0<**a**<2, und dass mindestens zwei siliciumgebundene Wasserstoffatome pro Molekül vorhanden sind,
mit mindestens zwei Alkenylgruppen pro Molekül enthaltenden Polyethermakromeren (P) und gegebenenfalls weiteren Alkenylgruppen enthaltenden Verbindungen (W) in einem Verfahrensschritt vernetzt werden.

## Claims

1. Electrode for an Li ion battery, which contains a crosslinked polyether-siloxane copolymer (V), which can be prepared by crosslinking of siloxane macromers (S) having the average general formula (1)
HₐR¹_{b}SiO_{(4-a-b)/2} (1),
where
**R¹** is a monovalent, SiC-bonded C₁-C₁₈ hydrocarbon radical which is free of aliphatic carbon-carbon multiple bonds and
**a** and **b** are nonnegative integers, with the proviso that 0.5<**(a+b)**<3.0 and 0<**a**<2, and that at least two silicon-bonded hydrogen atoms are present per molecule, by means of polyether macromers (P) containing at least two alkenyl groups per molecule and optionally further compounds (W) containing alkenyl groups, with polyethylene glycols functionalized by one allyl group being excepted from the compounds (W) as binder.

2. Electrode according to Claim 1, which can be produced by crosslinking the siloxane macromers (S) and polyether macromers (P) and optionally compounds (W) in the presence of active material, forming the polyether-siloxane copolymer (V).

3. Electrode according to either of the preceding claims, wherein linear polyorganosiloxanes of the general formula (2)
(HR²₂SiO_{1/2})ₛ(R²₃SiO_{1/2})ₜ(HR²SiO_{2/2})ᵤ(R²₂SiO_{2/2})ᵥ (2),
where
**R²** is a monovalent, SiC-bonded C₁-C₁₈ hydrocarbon radical which is free of aliphatic carbon-carbon multiple bonds and the nonnegative integers **s, t, u** and **v** fulfil the following relationships: (**s+t**)=2, (**s+u**)>2, 5<(**u+v**)<1000 and 0.1<**u**/(**u +v**)≤1 are used as silicone macromers.

4. Electrode according to any of the preceding claims, wherein the unsaturated polyalkylene oxides which have at least 3 alkylene oxide units and contain at least two terminal unsaturated groups are used as polyether macromers (P).

5. Electrode according to any of the preceding claims, wherein crosslinking of the siloxane macromers (S) by means of the polyether macromers (P) and optionally compounds (W), is catalyzed by hydrosilylation catalysts or proceeds by a free radical mechanism.

6. Electrode according to Claim 5, wherein Pt(0) complexes are used as hydrosilylation catalysts.

7. Electrode according to any of the preceding claims, which is an anode.

8. Electrode according to Claim 7, wherein the active material for the anode consists of elements selected from among carbon and silicon.

9. Process for preparing a crosslinked polyether-siloxane copolymer (V) as binder for the electrode in an Li ion battery, in which siloxane macromers (S) having the average general formula (1)
HₐR¹_{b}SiO_{(4-a-b)/2} (1),
where
**R¹** is a monovalent, SiC-bonded C₁-C₁₈ hydrocarbon radical which is free of aliphatic carbon-carbon multiple bonds and
**a** and **b** are nonnegative integers, with the proviso that 0.5<**(a+b)**<3.0 and 0<**a**<2, and that at least two silicon-bonded hydrogen atoms are present per molecule,
are crosslinked by means of polyether macromers (P) containing at least two alkenyl groups per molecule and optionally further compounds (W) containing alkenyl groups in one process step.

## Revendications

1. Électrode pour une batterie Li-ion, qui contient en tant que liant un copolymère polyéther/siloxane (V) réticulé, qui peut être préparé par réticulation de macromères siloxane (S) de formule générale moyenne (1)
HₐR¹_{b}SiO_{(4-a-b)/2} (1),
dans laquelle
**R¹** est un radical hydrocarboné en C₁-C₁₈ monovalent, lié par une liaison SiC, qui est exempt de liaisons multiples carbone-carbone aliphatiques et
**a** et **b** sont des nombres entiers non négatifs,
étant entendu que 0,5<(**a+b**)<3,0 et 0<**a**<2, et qu'au moins deux atomes d'hydrogène liés au silicium sont présents par molécule,
avec des macromères polyéther (P) contenant au moins deux groupes alcényle par molécule et éventuellement d'autres composés (W) contenant des groupes alcényle, parmi les composés (W) les polyéthylèneglycols à mono-fonctionnalisation allyle étant exclus.

2. Électrode selon la revendication 1, pouvant être produite par réticulation des macromères siloxane (S) et macromères polyéther (P) et éventuellement composés (W) en présence de matière active, de sorte qu'il en résulte le copolymère polyéther/siloxane (V).

3. Électrode selon l'une quelconque des revendications précédentes, dans laquelle on utilise comme macromères silicone des polyorganosiloxanes linéaires de formule générale (2)
(HR²₂SiO_{1/2})ₛ(R²₃SiO_{1/2})ₜ(HR²SiO_{2/2})ᵤ(R²₂SiO_{2/2})ᵥ (2),
dans laquelle
**R²** représente un radical hydrocarboné en C₁-C₁₈ monovalent lié par une liaison SiC, qui est exempt de liaisons multiples carbone-carbone aliphatiques et
les nombres entiers non négatifs **s, t, u** et **v** satisfont aux relations suivantes : (**s+t**) = 2, (**s+u**) > 2, 5< (**u+v**) < 1 000 et 0, 1 < u/ (**u+v**) ≤ 1.

4. Électrode selon l'une quelconque des revendications précédentes, dans laquelle on utilise comme macromères polyéther (P) des polyoxyalkylènes insaturés comportant au moins 3 unités oxyde d'alkylène, qui contiennent au moins deux groupes insaturés terminaux.

5. Électrode selon l'une quelconque des revendications précédentes, dans laquelle la réticulation des macromères siloxane (S) avec les macromères polyéther (P) et éventuellement des composés (W) est catalysée par des catalyseurs d'hydrosilylation ou s'effectue par voie radicalaire.

6. Électrode selon la revendication 5, dans laquelle on utilise comme catalyseurs d'hydrosilylation des complexes de Pt(0).

7. Électrode selon l'une quelconque des revendications précédentes, qui est une anode.

8. Électrode selon la revendication 7, dans laquelle la matière active pour l'anode consiste en des éléments qui sont choisis parmi le carbone et le silicium.

9. Procédé pour la préparation d'un copolymère polyéther/siloxane (V) réticulé, en tant que liant pour l'électrode dans une batterie Li-ion,
dans lequel des macromères siloxane (S) de formule générale moyenne (1)
HₐR¹_{b}SiO_{(4-a-b)/2} (1),
dans laquelle
**R¹** est un radical hydrocarboné en C₁-C₁₈ monovalent, lié par une liaison SiC, qui est exempt de liaisons multiples carbone-carbone aliphatiques et
**a** et **b** sont des nombres entiers non négatifs,
étant entendu que 0,5<(**a+b**)<3,0 et 0<**a**<2, et qu'au moins deux atomes d'hydrogène liés au silicium sont présents par molécule,
sont réticulés, dans une étape du procédé, avec des macromères polyéther (P) contenant au moins deux groupes alcényle par molécule et éventuellement d'autres composés (W) contenant des groupes alcényle.
